# EUROPÄISCHE PATENTANMELDUNG

(11) **EP 1 225 580 A1**
(43) Veröffentlichungstag der Anmeldung: **24.07.2002**
(21) Anmeldenummer: 01440374.5
(22) Anmeldetag: 06.11.2001
(51) Int. Cl.: G11B 20/00, G11B 19/02, H04M 1/65, G10L 19/00, H03M 7/30

(54) **Adaptive Speicherung von Audiosignalen**

(30) Priorität: 29.11.2000 DE 10059362
(71) Anmelder: ALCATEL, 75008 Paris (FR)
(72) Erfinder: Gerlach, Christian Georg, 71254 Ditzingen (DE); Bourmeyster, Ivan, 75015 Paris (FR)
(74) Vertreter: KOHLER SCHMID + PARTNER

(57) **Zusammenfassung**

Ein Verfahren zur Speicherung von Audiosignalen, insbesondere von Sprachnachrichten, umfasst folgende Verfahrensschritte:
(a) Digitalisieren von eingehenden Audiosignalen;
(b) Speichern der digitalisierten Audiosignale in Bereichen mit einer ersten Speichergröße bzw. Bitrate in einem Speicher (12);
(c) Überwachen der Belegung des Speichers (12);
(d) Feststellen des aktuellen Belegungsgrades, insbesondere einer vollständigen Belegung des Speichers (12);
(e) Reduzieren der Speichergröße bzw. Bitrate der bereits abgespeicherten Audiosignale auf einen zweiten, kleineren Wert, sobald ein vorgegebener Belegungsgrad des Speichers (12) erreicht ist; und
(f) Belegen des im Speicher (12) freiwerdenden Speicherplatzes zumindest teilweise mit neu eingehenden Audiosignalen.

Damit kann der zur Verfügung stehende Speicherplatz optimal ausgenutzt werden, wobei eine Qualitätsreduktion von Signalen dann, und nur dann vorgenommen wird, wenn dies wirklich notwendig ist, um neuere Signale abspeichern zu können, wobei der Grad einer Qualitätsreduktion so geringfügig wie möglich ist und wobei die jüngsten eingehenden Signale gegenüber den bereits gespeicherten älteren Signalen keine Qualitätsreduktion erfahren.

## Beschreibung

Die Erfindung betrifft ein Verfahren zur Speicherung von Audiosignalen, insbesondere von Sprachnachrichten. Weiter betrifft die Erfindung auch eine Vorrichtung, die ein Mittel zur Digitalisierung von eingehenden Audiosignalen, ein Speichermittel zur Speicherung derselben, sowie eine Steuerungseinrichtung umfasst, sowie Computerprogramme und insbesondere geeignete Servereinheiten, Signalisierungseinrichtungen, Prozessorbaugruppen und programmierbare Gate-Array-Baugruppen zur Unterstützung und Durchführung eines derartigen Verfahrens.

Die Aufnahme von Audio- und insbesondere Sprachsignalen wird heutzutage digital durchgeführt, wobei Audio- oder Sprach-Kodiergeräte und ein digitaler Speicher Verwendung finden. Vor dem eigentlichen Abspeichern werden die digitalisierten Audiosignale in der Regel komprimiert. Dadurch werden irrelevante und redundante Informationen aus dem Datenstrom entfernt. Aufgrund von Echtzeit-Bedingungen und anderen nicht-idealen Umständen, wie beispielsweise begrenzte Rechenkapazität oder Unsicherheit über die Eigenschaften der Quelle der Audiosignale ist diese Art der Signalbearbeitung nicht verlustfrei. Die nach der Abspeicherung wieder aufgerufenen und dekodierten Audiosignale bzw. Sprachdaten sind im Verhältnis zum Original fast immer in ihrer Qualität reduziert. Die Qualität der abgespeicherten Audiosignale bzw. kodierter Sprachnachrichten ist immer ungefähr umgekehrt proportional zum Kompressionsfaktor: Je stärker die Kompression, desto geringer wird anschließend die Qualität des reproduzierten Signals sein. Umgekehrt ist bei einer hohen Qualität der abgespeicherten Signale stets ein recht umfangreicher Speicherplatz erforderlich.

Die Qualitätsreduktion der Signale hängt also offenbar von der Bitrate des komprimierten Datenstroms ab, die beispielsweise zwischen 4 und 12 kbit/s liegen wird. Im Gegensatz zur Bandspeicherung kann die digitale Information heutzutage in schnellen RAM oder anderen digitalen Speichermitteln unterschiedlicher Art abgelegt werden, die zwar auch ihrer Größe nach reduziert sind, aber einen beliebigen Zugriff (= random access) erlauben.

Wegen der üblichen Instationarität der Quellinformation (Stille, Sprache, stimmhafte und stimmlose Abschnitte) sollte die Bitrate natürlich möglichst variabel sein. Wegen des speziellen Kanals - im Speichermittel - mit asynchronen Eigenschaften, ist das Kodieren mit einer variablen Bitrate möglich und gebräuchlich. Dadurch kann die Instationarität der Quelle einfach ausgenutzt werden, was sich schließlich in der mittleren Bitrate eines Codes wiederspiegelt. Dieser Durchschnitt wird üblicherweise über "mittlellange" Sprachproben erhalten.

Die üblichen Geräte mit digitaler Audio- bzw. Sprachaufzeichnung weisen einen begrenzten, aber in der Regel wahlfrei zugreifbaren Speicher auf, der beispielsweise die Funktion eines Anrufbeantworters erfüllen kann.

Aus dem Lehrbuch "SPEECH CODING AND SYNTHESIS" von W.B. Kleijn, 2. Auflage, 1998, Seiten 5 bis 7, ist das Abspeichern von eingehenden Sprachsignalen mit variabler Bitrate bekannt, wobei im Falle einer erhöhten Speicherbelegung neu eingehende Signale mit einer niedrigeren Bitrate abgespeichert werden sollen als die bereits im Speicher abgespeicherten Signale. Die letzteren jedoch werden nicht verändert, und es wird auch kein neuer Speicherbereich durch diese Prozedur freigemacht.

Nachteilig bei diesem bekannten Verfahren ist, dass sich damit eine ungleichmäßige Qualität der zeitlich hintereinander abgespeicherten Signale ergibt, wobei die neueren Signale eine schlechtere Qualität aufweisen als die bereits abgelegten älteren. Der zur Verfügung stehende Gesamtspeicherplatz kann daher keineswegs optimal ausgenutzt werden, weil insbesondere die älteren abgespeicherten Signale einen zu großen Speicherbereich wegnehmen. Außerdem kann bereits bei jüngeren Signalen nach diesem Verfahren eine Qualitätsreduktion vorgenommen werden, die möglicherweise gar nicht erforderlich wäre, wenn nicht weitere, noch jüngere Signale folgen.

Aus der US-A 5,546, 395 ist ein Verfahren zur dynamischen Selektion der Kompressionsrate von Sprachnachrichten bekannt, die digital über eine Telefonleitung übertragen werden. Die Kompressionsrate hängt ab von der Bandbreite des Telekommunikations-Kanals und von der Geschwindigkeit der Übertragung. Der Kompressionsfaktor wird folglich in Abhängigkeit dieser beiden extremen Faktoren geändert, Das bekannte Verfahren ist nur zur Signalübertragung, aber nicht zur Signalspeicherung geeignet, insbesondere nicht zu einer optimierten Belegung von vorhandenem Speicherplatz in einem Speichermittel.

Sobald der Kodieralgorithmus zusammen mit der oben erwähnten, korrespondierenden durchschnittlichen Bitrate ausgewählt ist, ist bei dem bekannten Verfahren in der Regel die Sprachqualität und das Maximum der speicherbaren Kapazität bestimmt und ein für allemal festgelegt. Die maximale Speicherdauer ist aber eine äußerst wichtige Spezifikation beim Vergleich von konkurrierenden Produkten auf dem Markt untereinander.

Während des üblichen Gebrauchs beobachtet man häufig, dass das Speichermittel sich nur langsam füllt und sehr oft über einen langen Zeitraum und einem großen Bereich leer bleibt, bevor ein Abruf der gespeicherten Nachrichten und eine Löschung derselben stattfindet, wodurch der Speicher wieder geleert wird. Das bedeutet, dass es für jede denkbare Situation besser wäre, die Information mit einer höheren Bitrate zu speichern, um die Möglichkeit einer höheren Reproduktionsqualität zu geben, und die Information nur in dem Umfang zu komprimieren, der erforderlich ist, um neue Daten abzuspeichern.

Gleichzeitig sollte es möglich sein, dass ein Sprachsignal beliebiger Länge bis zu seiner maximalen Länge aufgenommen wird, ohne dass eine Unterbrechung stattfindet. Die bestmögliche Reproduktionsqualität sollte also für jede beliebige (übliche) Länge erreicht werden.

Aufgabe der vorliegenden Erfindung ist es daher, ein Verfahren der eingangs beschriebenen Art mit möglichst einfachen Mitteln dahingehend weiterzubilden, dass der zur Verfügung stehende Speicherplatz optimal ausgenutzt werden kann, wobei eine Qualitätsreduktion von Signalen dann, und nur dann vorgenommen werden soll, wenn dies wirklich notwendig ist, um neuere Signale abspeichern zu können, wobei der Grad einer Qualitätsreduktion so geringfügig wie möglich sein sollte und wobei die jüngsten eingehenden Signale gegenüber den bereits gespeicherten älteren Signalen keine Qualitätsreduktion erfahren sollten.

Erfindungsgemäß wird diese Aufgabe auf ebenso überraschend einfache wie wirkungsvolle Art und Weise durch folgende Verfahrensschritte gelöst:
(a) Digitalisieren von eingehenden Audiosignalen;
(b) Speichern der digitalisierten Audiosignale in Bereichen mit einer ersten Speichergröße bzw. Bitrate in einem Speicher;
(c) Überwachen der Belegung des Speichers;
(d) Feststellen des aktuellen Belegungsgrades, insbesondere einer vollständigen Belegung des Speichers;
(e) Reduzieren der Speichergröße bzw. Bitrate der bereits abgespeicherten Audiosignale auf einen zweiten, kleineren Wert, sobald ein vorgegebener Belegungsgrad des Speichers erreicht ist; und
(f) Belegen des im Speicher freiwerdenden Speicherplatzes zumindest teilweise mit neu eingehenden Audiosignalen.

Das erfindungsgemäße Verfahren funktioniert auch bei quellenabhängiger, variabel-ratiger Kodierung der eingehenden Audiosignale.

Es wird eine digitale Audio- bzw. Sprachaufzeichnung mit begrenztem, aber wahlfrei zugreifbarem Speicher erreicht, wobei die Wiedergabegüte unter Beibehaltung einer stets garantierbaren maximalen Speicherdauer durch bessere Ausnutzung des sich nur langsam füllenden Speichers und eventuell unter Ausnutzung des gewöhnlichen Benutzerverhaltens, wie beispielsweise Benutzungspausen, erheblich verbessert wird. Insbesondere wird auch eine unterbrechungslose Konversationsaufnahme mit dem erfindungsgemäßen Verfahren ermöglicht.

Wenn Benutzungspausen dies erlauben, kann zusätzlich eine nahezu verlustfrei qualitätserhaltende Recodierung der abgespeicherten Signale a(n) stattfinden. Dadurch kann die für die Operation erforderliche Rechenkapazität auf Pausenzeiten verlegt werden und ist während Empfangszeiten für andere Operationen frei. Außerdem steht der dadurch gewonnene Speicherplatz gleich dem nächsten eingehenden Signalpaket zur Verfügung.

Weiterhin kann zwischen Sprachkodierern mit niedriger Bitrate und niedriger Qualität oder solchen mit höherer Qualität aber auch höherer Bitrate gewählt werden. Im ersten Fall ergibt sich eine lange maximale Aufzeichnungsdauer, während die Aufzeichnungsdauer in den anderen Fällen kürzer wird.

Wie bereits erwähnt, kann mit dem erfindungsgemäßen Verfahren eine der niedrigsten Bitrate entsprechende maximale Speicherdauer in jedem Benutzungsfall garantiert werden.

Bei der Aufnahme eines Signals füllt sich das Speichermittel nur langsam und wird daher nur selten vollständig ausgenutzt. Bei leerem Speicher erfolgt zunächst eine Aufzeichnung mit hoher Bitrate und entsprechend hoher Wiedergabequalität solange, bis der Speicher zu einem bestimmten Grad gefüllt ist. Anschließend wird die Speichergröße der bereits abgespeicherten Audiosignale verringert, so dass ein vorgegebener Belegungsgrad des Speichers nicht überschritten wird.

Besonders bevorzugt ist eine Variante des erfindungsgemäßen Verfahrens, bei der die neu eingehenden Audiosignale in Schritt (b) mit derselben Bitrate im Speicher abgespeichert werden wie die bereits oder noch im Speicher vorhandenen. Dadurch lässt sich eine gleichmäßige Bitrate aller gespeicherten Audiosignale gewährleisten.

Vorteilhaft ist auch eine alternative Verfahrensvariante, bei der die neu eingehenden Audiosignale in Schritt (b) mit einer höheren Bitrate im Speicher abgespeichert werden als die bereits oder noch vorhandenen. Mit dieser Verfahrensvariante kann eine bessere Ausnutzung des vorhandenen Speicherplatzes bei einer Bevorzugung von "jüngeren" eingehenden Signalen erreicht werden.

Bei einer vorteilhaften Weiterbildung dieser Verfahrensvariante wird in Schritt (e) die Speichergröße bzw. Bitrate bereits abgespeicherter Audiosignale a(n) abhängig vom Alter bzw. der Aufenthaltsdauer der betreffenden Audiosignale a(n) im Speicher reduziert. Dies ermöglicht eine differenziertere Behandlung der bereits gespeicherten Nachrichten, wobei das Kriterium für ein Überschreiben nicht unbedingt die Reihenfolge der Eintragung ist, was beispielsweise bei kurzzeitig aufeinanderfolgenden Einspeicherungen unangemessen wäre, sondern das (möglicherweise sogar "eingeprägte") Alter der Nachricht und damit ihre (inverse) Dringlichkeit und Relevanz.

Zusätzlich oder alternativ erfolgt bei einer weiteren bevorzugten Verfahrensvariante das Reduzieren der Speichergröße in Schritt (e) durch Recodieren der bereits abgespeicherten Audiosignale mit einer geringeren Bitrate als bei ihrer Einspeicherung in Schritt (b). Diese Verfahrensvariante ist besonders einfach und effizient durchführbar. Es kann eine optimale Ausnutzung der vorhandenen Speicherkapazität in Abhängigkeit vom aktuellen Datenanfall ermöglicht werden. Außerdem kann die Recodierung auch nicht-kausal in Bezug auf die Zeitrichtung der bereits abgespeicherten Signale vorgenommen werden.

Vorteilhaft ist eine Weiterbildung dieser erfindungsgemäßen Verfahrensvariante, bei der vor dem Recodieren die Audiosignale hinsichtlich ihres Informationsgehalts analysiert und die analysierten Parameter der Audiosignale unabhängig von ihrer zeitlichen Lage für die Recodierung verwendet werden. Dadurch kann auch eine "rückwärts gerichtete" statistische Abhängigkeit, also eine hochgradig nicht-kausale Betrachtungsweise angewandt werden. Dies ermöglicht es, die Stützstellen im zeitlichen Verlauf des zu speichernden und später interpolierend zu reproduzierenden Audiosignals auch erst nach Kenntnis des gesamten Signals zu setzen.

Besonders bevorzugt ist auch eine alternativ einsetzbare Verfahrensvariante, die sich dadurch auszeichnet, dass die eingehenden Audiosignale in hierarchischer Weise geschichtet in Ebenen von unterschiedlich wichtigen Informationsblöcken codiert werden, und dass das Reduzieren der Speichergröße in Schritt (e) durch sukzessives Weglassen der jeweils untersten Ebene bzw. Ebenen der hierarchisch geschichteten Informationsblöcke erfolgt. Für diese Verfahrensvariante ist überhaupt kein Rechenaufwand erforderlich, da keine Recodierung von bereits vorhandenen, abgespeicherten Audiosignalen erfolgt. Es müssen lediglich Speicherbereiche nach einem bestimmten vorgegebenen Muster überschrieben werden.

Das hierarchische Codieren an sich ist beispielsweise bekannt aus der US-A 5,815,097. Allerdings wird dort kein hierarchisches Abspeichern von Daten beschrieben und ein hierarchisches Überschreiben von empfangenen Audiosignalen in einem Speichermedium ist nicht einmal andeutungsweise offenbart.

Bei einer bevorzugten Weiterbildung der oben genannten Verfahrensvariante erfolgt die Schichtung der unterschiedlichen Informationsblöcke gemäß mindestens einem vorgebbaren Wichtigkeitskriterium. Damit ergeben sich vielfältige Möglichkeiten des Einsatzes des erfindungsgemäßen Verfahrens.

Als Wichtigkeitskriterium kann beispielsweise die Mittenfrequenz eines im Audiosignal enthaltenen Frequenz- bzw. Sprachbandes gewählt werden, so dass im Bedarfsfall in Schritt (e) die oberen Frequenzen des Audio- bzw. Sprachsignals weggelassen werden können.

Alternativ oder zusätzlich kann als Wichtigkeitskriterium ein mittlerer Fehler, vorzugsweise ein mittlerer quadratischer Fehler einer Parameterdarstellung des Audiosignals, insbesondere einer Mehrstufen-Vektorquantisierung gewählt werden, wobei im Bedarfsfall in Schritt (e) eine oder mehrere höhere Stufen der Parameterdarstellung vernachlässigt werden können.

Ebenfalls alternativ oder zusätzlich können in den Audiosignalen Sprachpausen erkannt und hierarchisch auf einer unteren Stufe eingeordnet werden.

Ebenso können in den Audiosignalen Hintergrundgeräusche erkannt und hierarchisch auf einer unteren Stufe eingeordnet werden.

Diese Verfahrensvariante lässt sich vorteilhaft dahingehend weiterbilden, dass im Bedarfsfall in Schritt (e) in den Audiosignalen aktuell vorhandene natürliche Hintergrundgeräusche durch künstliche, insbesondere synthetische Geräuschsignale (=comfort noise) ersetzt werden.

Bei einer weiteren Verfahrensvariante schließlich wird als Belegungsgrad des Speichers, ab dem in Schritt (e) eine Reduktion der Speichergröße bzw. Bitrate erfolgt, der Wert von 100% des im Speicher zur Verfügung stehenden Speicherplatzes vorgegeben, also die absolute Vollbelegung. Dadurch lässt sich eine besonders gute Ausnutzung der Eigenschaften des erfindungsgemäßen Verfahrens erzielen; insbesondere wird eine Qualitätsreduktion von bereits abgespeicherten Signalen erst dann vorgenommen, wenn dies aus Speicherplatzgründen wirklich unumgänglich ist.

In den Rahmen der vorliegenden Erfindung fällt auch eine Servereineit, eine Prozessor-Baugruppe sowie eine Gate-Array-Baugruppe zur Unterstützung des oben beschriebenen erfindungsgemäßen Verfahrens sowie ein Computerprogramm zur Durchführung des Verfahrens. Das Verfahren kann sowohl als Hardwareschaltung, als auch in Form eines Computerprogramms realisiert werden. Heutzutage wird eine Software-Programmierung für leistungsstarke DSP's, z.B. in modernen Mobiltelefonen bevorzugt, da neue Erkenntnisse und Zusatzfunktionen leichter durch eine Veränderung der Software auf bestehender Hardwarebasis implementierbar sind. Verfahren können aber auch als Hardwarebausteine beispielsweise in IP- oder TK-Endgeräten oder herkömmlichen Telefonanlagen implementiert werden.

Weiterhin fällt in den Rahmen der vorliegenden Erfindung auch eine Vorrichtung mit den eingangs genannten Merkmalen, wobei das Speichermittel Bereiche mit einer ersten Speichergröße zur Speicherung der digitalisierten Audiosignale aufweist; wobei die Steuerungseinrichtung Mittel zur Detektion einer Belegung aller Bereiche des Speichermittels aufweist; wobei das Mittel zur Digitalisierung, wenn festgestellt wird, dass ein vorgegebener Belegungsgrad der Bereiche des Speichermittels, insbesondere eine vollständige Belegung erreicht ist, eine Kompression der bereits abgespeicherten Audiosignale von der ersten Speichergröße auf eine zweite, kleinere Speichergröße vornehmen kann; und wobei die Steuerungseinrichtung neu eingehende Audiosignale auf frei gewordenen Speicherplatz im Speichermittel ablegen kann.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen :
- Fig. 1: ein Schema für die digitale Codierung von Audiosignalen, insbesondere Sprachnachrichten und Abspeicherung auf einem Speichermittel sowie zur Wiedergabe;
- Fig. 2: eine schematische Darstellungsweise einer hierarchischen Speicherbelegung;
- Fig. 3: eine parallele Codierung von neu eingehenden Audiosignalen s(n) und von bereits abgespeicherten Audiosignalen a(n);
- Fig. 4: ein Schema der hierarchischen Codierung mit den zugehörigen Datenströmen; und
- Fig. 5: ein Schema des erfindungsgemäßen Überschreibens von niedrigen hierarchischen Stufen im Speichermittel mit neu eingehenden Audiosignalen.

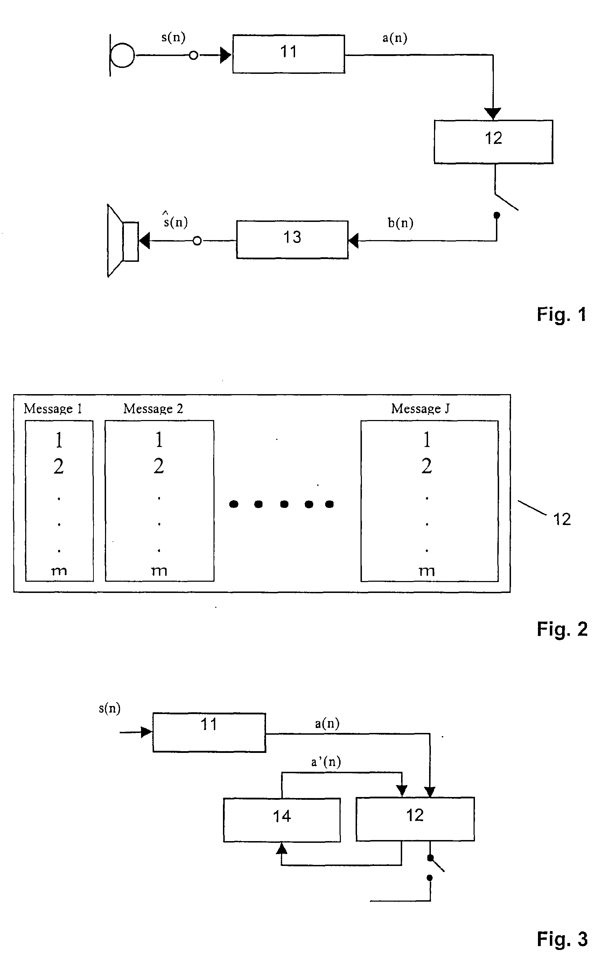

In Fig. 1 ist schematisch für eine mit einem Mikrofon- und einem Lautsprechersymbol angedeutete Audio-Verbindung, insbesondere eine Telekommunikationsverbindung gezeigt, wie ein Audiosignal s(n) in einer Codiereinrichtung 11 in ein digitalisiertes und komprimiertes Signal a(n), beispielsweise mit einer Bitrate zwischen 4 und 12 kbit/s digitalisiert und komprimiert und anschließend in einem Speichermittel 12 abgespeichert wird. Von dort können Audiodaten b(n) abgerufen und in einem Decodierer 13 rekonstruiert und als Audiosignal ŝ(n) einem Lautsprecher zugeführt werden.

Um bei der Rekonstruktion der abgerufenen und decodierten Audiosignale eine höhere durchschnittliche Qualität zu erreichen, während gleichzeitig eine gewisse garantierte maximale Speicherkapazität auch bei neu eingehendem Audiodatenstrom erhalten bleibt, wird gemäß einer Ausführungsform der vorliegenden Erfindung vorgeschlagen, die im Speichermittel 12 abgespeicherten komprimierten Audiodaten in einer bestimmten Weise zu überschreiben:

Zu Beginn werden in das zunächst leere Speichermittel die Audiosignale mit hoher Bitrate (und entsprechend hoher Reproduktionsqualität) abgespeichert, bis der Speicher voll ist, wie in Fig. 2 angedeutet, wenn insgesamt J Nachrichten bzw. Pakete von Audiosignalen eingegangen sind.

Danach werden die abgespeicherten Signale mit einer niedrigeren Bitrate und entsprechend höherer Kompression codiert und ein Teil der Information, die bereits im Speichermittel 12 abgespeichert ist, wird überschrieben.

Um zu ermöglichen, dass die bereits abgespeicherten Audiosignale immer noch vernünftig rekonstruierbar bleiben, gibt es mehrere Möglichkeiten:

In Fig. 3 ist eine Ausführungsform des erfindungsgemäßen Verfahrens dargestellt, bei der eine Art "fliegende" Kompression der Audiodaten vorgenommen wird. Hierbei werden in der Codiereinrichtung 11 die eingehenden Neu-Daten s(n), wie in Fig. 1 gezeigt, digitalisiert und komprimiert und als Datenstrom a(n) dem Speichermittel 12 zugeführt. Parallel dazu werden die bereits im Speichermittel 12 abgespeicherten, komprimierten Audiodaten in einem Codec 14 weiterkomprimiert und als Datenstrom a'(n) dem Speichermittel 12 zugeführt. Diese zweite Kompression von bereits gespeicherter Information schafft genügend freien Speicherplatz im Speichermittel 12, so dass der eingehende Audiodatenstrom a(n), der von der parallel dazu arbeitenden Codiereinrichtung 11 kommt, ebenfalls auf dem Speichermittel 12 abgespeichert werden kann.

Hierfür wird allerdings eine gewisse Rechenkapazität für die beiden parallelen Codieroperationen erforderlich.

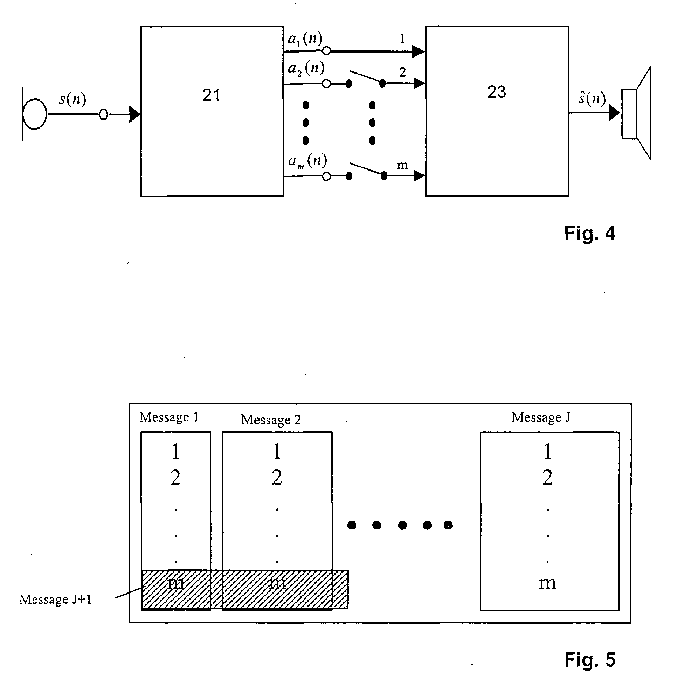

Bei einer weiteren, in Fig. 4 angedeuteten Möglichkeit der Audiodaten-Verarbeitung gemäß der vorliegenden Erfindung kann dieser Rechenkapazität eingespart werden.

Hier werden die eingehenden Audiosignale s(n) zunächst in einer hierarchischen Codiereinrichtung 21 nach einem hierarchischen Codierschema digitalisiert und komprimiert. Dabei werden die Audiosignale in einer Weise codiert, dass sie einen hierarchisch geordneten Datenstrom ergeben, wie in Fig. 4 angedeutet ist. Dieser Datenstrom wird (was in Fig. 4 der Einfachheit halber weggelassen wurde) entsprechend hierarchisch geschichtet in einer Menge von komprimierten Datenströmen a₁(n), a₂(n),...,aₘ(n) einer Speichereinheit zugeführt, wo die komprimierten Daten entsprechend hierarchisch abgelegt werden. Von dort können sie wiederum bei Bedarf abgerufen und in einem ebenfalls hierarchisch organisierten Decodierer 23 zu einem Audiosignal ŝ(n) zusammengesetzt und einem Lautsprecher zugeführt werden.

Die Kerninformation, die in Fig. 4 mit dem Datenstrom a₁(n) bezeichnet ist, bildet die Lage 1, die in der hierarchischen Schichtung der Daten die oberste Stelle einnimmt. Diese komprimierten Audiodaten können benutzt werden, um das eingehende Audiosignal s(n) mit der niedrigst möglichen Genauigkeit zu rekonstruieren. Dies entspricht der niedrigst möglichen Bitrate bzw. der höchstmöglichen Kompressionsstufe.

Wenn zusätzliche Schichten 2, 3 zur Lage 1 hinzugenommen werden, wird das rekonstruierte Signal in seiner Qualität verbessert. Bei der Verwendung sämtlicher Schichten bis zur Schicht m ergibt sich die höchstmögliche Bitrate und damit die höchstmögliche Reproduktionsqualität des decodierten Signals. Dieser Fall entspricht dem hoch-ratigen Codieren, welches zu Beginn einer Einspeicherung des eingehenden Audiosignals angewandt wird. Die abgespeicherten Schichten 1 bis m für die unterschiedlichen Signalpakete, wie sie im Speichermittel 12 vorliegen, sind im übrigen auch in Fig. 2 gezeigt.

Man kann nun verschiedene Strategien anwenden, um mit diesem hierarchischen Schema von m Schichten bei Bedarf Speicherplatz im Speichermittel 12 freizumachen. Eine wichtige Ausführungsform des erfindungsgemäßen Verfahrens ist in Fig. 5 dargestellt, wo in dem Fall, wenn der Speicherplatz im Speichermittel 12 mit J abgespeicherten Audiosignalpaketen voll belegt ist, ein neu eingehendes Audiosignalpaket J + 1 auf die unterste Schicht m mit den "unwichtigsten" hierarchischen Daten überschrieben wird. Es bleiben daher für die bereits abgespeicherten Audiosignale 1 bis J nur noch m - 1 Schichten übrig.

Das neue eingehende Audiosignalpaket J + 1 kann entweder mit der gleichen, nunmehr reduzierten Bitrate, also in m - 1 Schichten, oder mit der ursprünglich maximal möglichen Anzahl von m hierarchischen Schichten eingespeichert werden. Im ersteren Falle wären sämtliche im Speichermittel 12 abgespeicherten Signalpakete mit untereinander gleichmäßiger Qualität vorhanden, im letzteren Falle würden neu eingehende Signalpakete gegenüber älteren hinsichtlich ihrer Qualität aufgrund einer höheren Anzahl von hierarchischen Schichten bevorzugt.

Wenn der durch die oben beschriebene Prozedur gewonnene Speicherplatz wiederum aufgebraucht und das Speichermittel 12 mit abgespeicherten Audiosignalpaketen voll ist, können nach dem gleichen Schema durch Überschreiben der jeweils untersten hierarchischen Schichten der abgespeicherten Signalpakete Schritt für Schritt die für die Rekonstruktion der Audiosignale erforderlichen Daten überschrieben werden, wobei aufgrund der abnehmenden hierarchischen Nummer der jeweils überschriebenen Datenschicht und damit der zunehmenden "Wichtigkeit" für die Rekonstruktion des Signals die maximal mögliche Signalqualität bei der Rekonstruktion stetig abnimmt. Auf diese Weise können mehr und mehr neue Signale bei gleicher Speicherkapazität auf dem Speichermittel 12 abgespeichert werden, bis schließlich nur noch die oberste hierarchische Schicht bereits früher abgespeicherter Audiosignale übrig bleibt. Wird auch diese noch überschrieben, sind die entsprechenden Audiosignalpakete aus dem Speichermittel 12 vollends gelöscht. Dies kann beispielsweise bei einem Anrufbeantworter eine lange zurückliegende Sprachnachricht sein, die aktuell keine Relevanz mehr hat.

Der Kompressionsfaktor für diese niedrigste Codierungsstufe definiert daher die maximale Speicherkapazität des Systems, die unter allen Umständen garantiert werden kann.

Es sei darauf hingewiesen, dass der oben beschriebene hierarchische Überschreibungsmechanismus eine graduelle Verminderung der Qualität der abgespeicherten Information mit sich bringt, die aber nur dann erfolgt, wenn dies notwendig ist, um neue Informationen auf dem begrenzten Speichermedium aufzunehmen.

Ideal wäre dieses Verfahren, wenn man unendlich viele hierarchische Schichten von beliebig hoher Feinheit einführen könnte. Dies wird natürlich in der Praxis nicht möglich sein, sondern man muss sich auf eine endliche Anzahl von hierarchischen Schichten beschränken. Wenn die hierarchische Codierung exakt genauso effizient wie ein nicht-hierarchischer Codieralgorithmus arbeiten würde, könnte die optimale Lösung der oben genannten Erfindungsaufgabe erreicht werden. Diese Lösung wäre dann unabhängig von der Anzahl der abzuspeichernden Datenpakete und der Algorithmus würde immer die optimale Rekonstruktionsqualität für alle Datenpakte zu jeder Zeit unter Benutzung einer vorhandenen begrenzten Speicherkapazität sicherstellen.

Für beide oben vorgestellten Möglichkeiten einer Überschreibung von bereits belegtem Speicherplatz ist es bemerkenswert, dass der erfindungsgemäße Mechanismus in jedem Fall funktioniert, sogar wenn keine Pausenzeiten vorliegen, in denen das System nicht benutzt wird. Dies kommt insbesondere dann vor, wenn im Falle einer Anrufbeantwortermaschine ein Gespräch aufgezeichnet werden muss und es von vorne herein nicht bekannt ist, welche Zeitdauer das aufzuzeichnende Gespräch einnehmen wird. Speziell in diesem Falle soll ja die garantierte maximale Speicherkapazität des Systems so hoch wie möglich sein.

Die erfindungsgemäße Überschreibungstechnik ist auch kompatibel mit einem Verfahren, bei dem quellenabhängig eine variable Bitrate eingesetzt wird. Um im Bild von Fig. 5 zu bleiben, wäre dann die Dicke der hierarchischen Schichten variabel bzw. die Zeitskala würde zwischen zwei Grenzwerten variieren, wenn man den Speicher 12 durchläuft.

Eine weitere Verbesserung der Ausführungsformen des erfindungsgemäßen Verfahrens kann erreicht werden, wenn die letzteren kombiniert werden mit einem Offline-, nicht - Echtzeit, nicht - kausalem Recodieren, welches in Ruhepausen des Systems durchgeführt wird, wenn keine neuen Audiosignale eingehen. Dadurch kann die maximal nutzbare Speicherkapazität in vielen Fällen abhängig vom Benutzerverhalten erheblich gesteigert werden.

Im Falle von Sprachcodierung mit einer Bitrate zwischen 12 und 4 kbit/s kann die Verbesserung aufgrund der Anwendung des erfindungsgemäßen Verfahrens folgendermaßen quantifiziert werden: Eine Codierung mit 12 kbit/s beispielsweise mit einem GSM-EFR Codec ergibt nahezu die Qualität einer "Leitungsübertragung" gemäß ETSI. Eine Codierung mit 4 oder 3 kbit/s, die in der Regel bei einem Anrufbeantworter angewendet werden dürfte, wie er derzeit auf dem Markt erhältlich ist, ergibt eine signifikant niedrigere Qualität, aber die Sprache sollte noch so weit verständlich bleiben, dass die darin übermittelten Nachrichten verstanden werden können. Daraus kann man schließen, dass bei der Verwendung der erfindungsgemäßen Technik die Speicherkapazität um einen Faktor 2 bis 3 abhängig von der Effizienz des hierarchischen Codierungsschemas erhöht werden kann im Verhältnis zur Benutzung eines Codec mit der höchsten Bitrate.

Weiterhin ist das erfindungsgemäße Verfahren erheblich effizienter als eines, welches lediglich die Bitrate der neu eingehenden Audiosignale während des Betriebs reduziert, wenn der zur Verfügung stehende Speicherplatz abnimmt.

Die Verwendung des oben erwähnten hochgradigen Codec alleine würde zwar eine gute Sprachqualität für die meisten zu erwartenden Fälle ergeben und in dieser Hinsicht mit den Bedürfnissen der Verbraucher übereinstimmen, wäre aber schon deswegen praktisch nicht möglich, weil dadurch die garantierte maximale Speicherkapazität zu weit beschränkt würde. Mit dem Verfahren nach der vorliegenden Erfindung hingegen wird dies möglich, ohne dass dafür die maximale Speicherkapazität "geopfert" werden müsste.

## Patentansprüche

1. Verfahren zur Speicherung von Audiosignalen, insbesondere von Sprachnachrichten, mit folgenden Verfahrensschritten:
(a) Digitalisieren von eingehenden Audiosignalen s(n);
(b) Speichern der digitalisierten Audiosignale a(n) in Bereichen mit einer ersten Speichergröße bzw. Bitrate in einem Speicher (12);
(c) Überwachen der Belegung des Speichers (12);
(d) Feststellen des aktuellen Belegungsgrades, insbesondere einer vollständigen Belegung des Speichers (12);
(e) Reduzieren der Speichergröße bzw. Bitrate der bereits abgespeicherten Audiosignale a(n) auf einen zweiten, kleineren Wert, sobald ein vorgegebener Belegungsgrad des Speichers (12) erreicht ist; und
(f) Belegen des im Speicher (12) freiwerdenden Speicherplatzes zumindest teilweise mit neu eingehenden Audiosignalen s(n).

2. Verfahren nach Anspruch 1, **dadurch gekennzeichnet, dass** zusätzlich ein Reduzieren der Speichergröße bzw. Bitrate der bereits abgespeicherten Audiosignale a(n) in Benutzungspausen erfolgt, wenn gerade keine neu eingehenden Audiosignale s(n) empfangen werden.

3. Verfahren nach Anspruch 1, **dadurch gekennzeichnet, dass** das Reduzieren der Speichergröße in Schritt (e) durch Recodieren der bereits abgespeicherten Audiosignale a(n) mit einer geringeren Bitrate als bei ihrer Einspeicherung in Schritt (b) erfolgt.

4. Verfahren nach Anspruch 1, **dadurch gekennzeichnet, dass** die eingehenden Audiosignale s(n) in hierarchischer Weise geschichtet in Ebenen von unterschiedlich wichtigen Informationsblöcken codiert werden, und dass das Reduzieren der Speichergröße in Schritt (e) durch sukzessives Weglassen der jeweils untersten Ebene bzw. Ebenen der hierarchisch geschichteten Informationsblöcke erfolgt.

5. Verfahren nach Anspruch 4, **dadurch gekennzeichnet, dass** die Schichtung der unterschiedlichen Informationsblöcke gemäß mindestens einem vorgebbaren Wichtigkeitskriterium erfolgt.

6. Verfahren nach Anspruch 5, **dadurch gekennzeichnet, dass** als Wichtigkeitskriterium die Mittenfrequenz eines im Audiosignal s(n) enthaltenen Frequenzbandes gewählt wird, und dass im Bedarfsfall in Schritt (e) die oberen Frequenzen des Audiosignals weggelassen werden.

7. Verfahren nach Anspruch 5, **dadurch gekennzeichnet, dass** als Wichtigkeitskriterium ein mittlerer Fehler, vorzugsweise ein mittlerer quadratischer Fehler einer Parameterdarstellung des Audiosignals s(n), insbesondere einer Mehrstufen-Vektorquantisierung gewählt wird, und dass im Bedarfsfall in Schritt (e) eine oder mehrere höhere Stufen der Parameterdarstellung vernachlässigt werden.

8. Verfahren nach Anspruch 1, **dadurch gekennzeichnet, dass** als Belegungsgrad des Speichers (12), ab dem in Schritt (e) eine Reduktion der Speichergröße bzw. Bitrate erfolgt, 100% des im Speicher (12) zur Verfügung stehenden Speicherplatzes vorgegeben wird.

9. Vorrichtung zur Speicherung von Audiosignalen, insbesondere von Sprachnachrichten, die ein Mittel (11; 21) zur Digitalisierung von eingehenden Audiosignalen s(n), ein Speichermittel (12) zur Speicherung derselben, sowie eine Steuerungseinrichtung umfasst,
wobei das Speichermittel (12) Bereiche mit einer ersten Speichergröße zur Speicherung der digitalisierten Audiosignale a(n) aufweist;
wobei die Steuerungseinrichtung Mittel zur Detektion einer Belegung aller Bereiche des Speichermittels (12) aufweist;
wobei das Mittel (11; 21) zur Digitalisierung, wenn festgestellt wird, dass ein vorgegebener Belegungsgrad des der Bereiche des Speichermittels (12), insbesondere eine vollständige Belegung erreicht ist, eine Kompression der bereits abgespeicherten Audiosignale a(n) von der ersten Speichergröße auf eine zweiten, kleinere Speichergröße vornehmen kann; und
wobei die Steuerungseinrichtung neu eingehende Audiosignale s(n) auf frei gewordenen Speicherplatz im Speichermittel (12) ablegen kann.
